# EUROPÄISCHE PATENTSCHRIFT

(11) **EP 2 706 736 B1**
(45) Veröffentlichungstag und Bekanntmachung des Hinweises auf die Patenterteilung: **18.03.2015**
(21) Anmeldenummer: 13004885.3
(22) Anmeldetag: 26.11.2008
(51) Int. Cl.: H04L 29/12, H04L 29/08, G06K 19/07, G06F 9/445, G06Q 20/34, G07F 7/08, G07F 7/10

(54) **Schreibsystem für portable Datenträger**
Writing system for portable data carriers
Système d'inscription sur des supports de données portables

(30) Priorität: 27.11.2007 DE 102007057001
(43) Veröffentlichungstag der Anmeldung: 12.03.2014
(62) Teilanmeldung aus: 08853408.6
(73) Patentinhaber: Giesecke & Devrient GmbH, 81677 München (DE)
(72) Erfinder: Hinz, Walter, 85748 Garching (DE); Englbrecht, Erich, 84405 Dorfen (b. München) (DE); Spitz, Stephan, 85757 Karlsfeld (DE); Palsherm, Thomas, 85609 Aschheim (DE)

(56) Entgegenhaltungen:
- WO-A-2005/064889
- WO-A1-02/093868
- ANONYMOUS: "Universal Serial Bus Commcations Class Subclass Specification for Ethernet Emulation Model Devices Revision 1.0", INTERNET CITATION, 2. Februar 2005 (2005-02-02), XP002389885, Gefunden im Internet: URL:http://www.usb.org/developers/devclass _docs/CDC_EEM10.pdf [gefunden am 2006-07-12]

## Beschreibung

Die vorliegende Erfindung betrifft ein Verfahren zum Einschreiben von Betriebsdaten in einen portablen Datenträger bei der Herstellung des Datenträgers durch ein Schreibsystem sowie ein entsprechendes Schreibsystem.

WO 2005/064889 A1 beschreibt eine Chipkarte mit DHCP-Server, welcher den Subeinheiten innerhalb der Karte entsprechende IP-Adressen zuweist.

Im Rahmen der Herstellung von portablen Datenträgern, wie z. B. Chipkarten, Smart Cards oder dergleichen, werden vor einer Ausgabe der Datenträger an die jeweiligen Endnutzer vielfältige Betriebsdaten in den Datenträger eingeschrieben. So werden beispielsweise bei der Komplettierung eines Datenträgers die softwaretechnischen Voraussetzungen für dessen Initialisierung geschaffen, bei der für eine Vielzahl von Datenträgern identische datenträger- und personenunabhängige Betriebsdaten in den Datenträger eingeschrieben werden (nachfolgend umfasst der Begriff "Initialisierung" auch die vorbereitende Komplettierung). Bei der anschließenden Personalisierung werden dann personenindividuelle Betriebsdaten in den Datenträger eingeschrieben, z. B. individuelle Identifikationsmerkmale desjenigen Endnutzers, an den der betreffende Datenträger ausgegeben werden soll.

Derartige Betriebsdaten, die ein Betriebssystem oder zumindest Teile des Betriebssystems des Datenträgers umfassen können, können mehrere MBytes umfassen. Derzeitig werden z. B. Smart Cards und Chipkarten über das gängige T=1- oder T=0-Kommunikationsprotokoll gemäß ISO 7816 mit Hilfe von ADPU-Kommunikationseinheiten ("Application Data Protocol Units") initialisiert und/oder personalisiert. Jedoch ist die Übertragungsgeschwindigkeit des T=0/T=1-Kommunikationsprotokolls derart gering, dass eine effiziente Initialisierung/Personalisierung einer Vielzahl von Datenträgern nicht möglich ist. Darüber hinaus wird auch eine quasi-parallele Initialisierung/Persönalisierung von Datenträgern von dem T=0/T=1-Kommunikationsprotokoll nicht unterstützt, weil es lediglich für eine zweiseitige Datenkommunikation zwischen einem portablen Datenträger und einem Schreib-/Lesegerät vorgesehen ist.

Demzufolge ist die Aufgabe der vorliegenden Erfindung, ein effizientes Einschreiben von Betriebsdaten bei der Herstellung eines portablen Datenträgers zu ermöglichen.

Diese Aufgabe wird durch den Gegenstand der unabhängigen Ansprüche gelöst. Vorteilhafte Ausgestaltungen und Weiterbildungen sind in den abhängigen Ansprüchen angegeben.

Erfindungsgemäß wird bei einem Verfahren zum Einschreiben von Betriebesdaten in einen mit einem Schreibsystem verbundenen portablen Datenträger im Rahmen einer Herstellung des Datenträgers eine individuelle Adressierung des betreffenden Datenträgers erzeugt, über die der Datenträger beim Einschreiben der Betriebsdaten schreibsystemweit eindeutig adressiert werden kann.

Ein entsprechendes Schreibsystem umfasst eine Zentralstation und zumindest eine über ein geeignetes Kommunikationsnetz mit der Zentralstation verbundene Verteilerstation. Mit einer Verteilerstation können wiederum jeweils mehrere Datenträger zum Einschreiben von Betriebsdaten verbunden sein. Die in einen bestimmten Datenträger einzuschreibenden Betriebsdaten werden von der Zentralstation an diejenige Verteilerstation des Schreibsystems übertragen, mit der der betreffende Datenträger verbunden ist, und schließlich von der Verteilerstation an den Datenträger weitergeleitet bzw. in ihn eingeschrieben. Dabei kann der Datenträger von der Zentralstation und gegebenenfalls auch von der entsprechenden Verteilerstation über die erzeugte individuelle Adressierung systemweit eindeutig adressiert werden.

Die individuelle Adressierung eines Datenträgers ist also in dem gesamten durch das Schreibsystem gebildeten Kommunikationsnetz eindeutig dem betreffenden Datenträger zugeordnet, unabhängig von der Größe des Kommunikationsnetzes, der Anzahl an Kommunikationsgeräten, die in dem Kommunikationsnetz zusammengeschlossen sind, oder anderen derartigen Parametern. Dadurch, dass eine individuelle Adressierung systemweit eindeutig (d.h. einmalig) ist, wird eine einfache Gestaltung der Verteilerstationen ermöglicht, da diese aufgrund der systemweit eindeutigen Adressierungen keine Adressumsetzungen, Re-Adressierungen oder ähnliche adressarithmetische Operationen vornehmen müssen. Darüber wird auch ein Einschreiben von Betriebsdaten in Datenträger in größeren (entsprechend abgesicherten) Kommunikationsnetzen ermöglicht, z.B. in Weitebereichsnetzen, die sich über große geographische Distanzen erstrecken.

Der Prozess des Erzeugens einer schreibsystemweit eindeutigen, individuellen Adressierung ist derart ausgestaltet, dass mehrere gleichzeitig mit einer Verteilerstation verbundene Datenträger von dem Schreibsystem, d.h. insbesondere von der Zentralstation, die den Einschreibvorgang initiiert, aber vorzugsweise auch von einer Verteilerstation, systemweit eindeutig adressiert werden können, weil die für die angeschlossenen Datenträger jeweils erzeugten individuellen Adressierungen paarweise verschieden zueinander sind und sich deshalb keine Adressierungskonflikte ergeben können. Durch die Möglichkeit der systemweit eindeutigen individuellen Adressierung jedes portablen Datenträgers ist es insbesondere möglich, gleichartige oder identische Daten in mehrere portable Datenträger durch nebenläufige Prozesse (quasi-) gleichzeitig einzuschreiben, da diese von dem Schreibsystem jederzeit unterscheidbar sind.

Unter einem quasi-gleichzeitigen Einschreiben von Betriebsdaten ist in diesem Zusammenhang insbesondere ein Multitasking-Verfahren zu verstehen, das eine nebenläufige Ausführung einzelner paralleler Einschreibprozesse ermöglicht, indem die Prozesse in so kurzen Abständen alternierend aktiviert werden, dass der Eindruck der Gleichzeitigkeit entsteht. Darüber hinaus kann unter einem quasi-gleichzeitigen Einschreiben auch ein echtes paralleles Einschreiben von Betriebsdaten verstanden werden, sofern die Verteilerstation über die entsprechenden computerarchitektonischen Voraussetzungen verfügt.

Auf diese Weise kann durch ein paralleles Einschreiben von identischen oder gleichartigen Betriebsdaten (d.h. Initialisierungsdaten oder Personalisierungsdaten) in eine Vielzahl von identischen oder gleichartigen portablen Datenträgern der Durchsatz bei der Initialisierung oder Personalisierung von portablen Datenträgern erhöht werden, was eine effiziente Datenträgerherstellung ermöglicht. Des Weiteren wird der Platzbedarf bei der Initialisierung/Personalisierung reduziert, da bei der gleichzeitigen Initialisierung/Personalisierung einer Vielzahl von Datenträgern für nur wenige bzw. für nur eine einzige Verteilerstation Platz benötigt wird. Ein derartiges Schreibsystem ist darüber hinaus nahezu beliebig erweiterbar, da keine Adressierungskonflikte auftreten können.

Die individuelle Adressierung ist dabei vorzugsweise eine mehrteilige Adressierung, die mehrere Adressen für verschiedene Schichten eines verwendeten mehrschichtigen Kommunikationsprotokolls bereitstellt. Dabei ist jeweils eine dieser mehreren Adressen, die die individuelle Adressierung insgesamt umfasst, zur systemweit eindeutigen Adressierung des Datenträgers über eine der Protokollschichten des mehrschichtigen Kommunikationsprotokolls geeignet. Erfindungsgemäß kann die individuelle Adressierung dezentral von den Datenträgern als auch zentral von einer Verteilerstation erzeugt werden. Ebenso ist es möglich, dass zumindest ein Teil der mehrteiligen Adressierung dezentral von einem Datenträger erzeugt wird, vorzugsweise zumindest eine der mehreren Adressen zur Adressierung des Datenträgers über die entsprechende Protokollschicht des verwendeten mehrschichtigen Kommunikationsprotokolls, und ein anderer Teil der mehrteiligen Adressierung wird von der Verteilerstation erzeugt.

Dementsprechend umfassen sowohl ein erfindungsgemäßer portabler Datenträger als auch eine erfindungsgemäße Verteilerstation zumindest einen Speicher, eine Schnittstelleneinrichtung und einen Adressgenerator, der zumindest einen Teil einer individuellen Adressierung erzeugt, mit der das Schreibsystem, mit dem der Datenträger über seine Schnittstelleneinrichtung verbunden ist, den Datenträger schreibsystemweit eindeutig adressieren und ansprechen kann.

Zur Verbindung eines portablen Datenträgers mit einer Verteilerstation des Schreibsystems umfassen ein Datenträger und eine Verteilerstation jeweils korrespondierende Schnittstelleneinrichtungen, wobei über die Schnittstellenkeinrichtung einer Verteilerstation vorzugsweise mehrere Datenträger gleichzeitig angeschlossen werden können. Darüber hinaus umfasst jeder Datenträger bzw. jede Verteilerstation vorzugsweise eine Steuereinrichtung, die die Kommunikation mit der Verteilerstation bzw. mit den Datenträgern und das Erzeugen einer individuellen Adressierung oder eines von dem Datenträger bzw. von der Verteilerstation zu erzeugenden zumindest einen Teils der individuellen Adressierung durch den entsprechenden Adressgenerator steuert. Jeder Adressgenerator eines mit der Verteilerstation verbundenen Datenträgers bzw. einer Verteilerstation erzeugt dementsprechend auf Veranlassung der entsprechenden Steuereinrichtung die gesamte oder zumindest einen Teil einer individuellen Adressierung für den betreffenden Datenträger, die paarweise verschieden zu allen weiteren individuellen Adressierungen sind, die für weitere mit der Verteilerstation verbundene Datenträger erzeugt werden. Die individuellen Adressierungen bzw. diejenigen Teile der individuellen Adressierungen, die von einem Datenträger bzw. einer Verteilerstation zu erzeugen sind, können z.B. basierend auf Zufallsinformationen oder individuellen Kennungen der Datenträger erzeugt werden, die ihrerseits bereits paarweise verschieden sind. Eine Steuereinrichtung eines Datenträgers veranlasst den zugehörigen Adressgenerator, einen von dem Datenträger zu erzeugenden Teil der individuellen Adressierung zu erzeugen, z.B. wenn sie das Anschließen des Datenträgers an das Schreibsystem bzw. an eine Verteilerstation des Schreibsystems registriert oder ein entsprechendes Adressanforderungssignal von dem Schreibsystem empfängt. Ebenso veranlasst die Steuereinrichtung einer Verteilerstation ihren Adressgenerator, einen von der Verteilerstation zu erzeugenden Teil der individuellen Adressierung zu erzeugen, z.B. wenn die Verteilerstation das Anschließen von einem oder mehreren Datenträgern registriert oder ein entsprechendes Adressanforderungssignal von der Zentralstation erhält.

Darüber hinaus ist es vorteilhaft, dass nicht nur paarweise verschiedene individuelle Adressierungen bezüglich solcher Datenträger erzeugt werden, die jeweils gleichzeitig mit einer oder mehreren Verteilerstationen des Schreibsystems verbunden sind, sondern auch für möglichst viele bzw. sogar alle portablen Datenträger, die von dem Schreibsystem zeitlich versetzt jemals initialisiert/personalisiert werden, so dass die individuellen Adressen aller initialisierten/personalisierten Datenträger systemweit einzigartig sind und demzufolge auch nach dem Schreibvorgang dauerhaft datenträgerindividuell bleiben.

Ferner ist es prinzipiell vorteilhaft, dass die Betriebsdaten von der Zentralstation über die Verteilerstationen zu den Datenträgern gemäß einem einheitlichen Kommunikationsprotokoll weitergeleitet werden, um in diesem Kornmunikationsprotokoll die erfindungsgemäße schreibsystemweit eindeutige Adressierung durchgängig einsetzen zu können. Als ein solches durchgängig ges Kommunikationsprotokoll eignet sich insbesondere das mehrschichtige TCP/IP-Protokoll. Deshalb wird zwischen der Zentralstation und den Verteilerstationen jeweils eine TCP/IP-Verbindung aufgebaut, während die Verteilerstationen zum Einschreiben von Betriebsdaten ihrerseits vorzugsweise TCP/ IP-Verbindungen zu allen jeweils über deren Schnittstelleneinrichtungen angeschlossenen portablen Datenträgern aufbauen. Dementsprechend umfassen die für die jeweiligen Datenträger, die durch ein TCP/IP-Kommunikationsnetz mit der jeweiligen Verteilerstation verbundenen sind, zu erzeugenden individuellen Adressierungen zumindest jeweils eine systemweit eindeutige, datenträgerindividuelle IP-Adresse, die zumindest bezüglich aller anderen zu diesem Zeitpunkt an dem Schreibsystem angeschlossenen Datenträger paarweise verschieden ist.

Die IP-Adresse kann sowohl von dem Datenträger bzw. dem Adressgenerator des Datenträgers als auch von einer Verteilerstation des Schreibsystems bzw. einem Adressgenerator dieser Verteilerstation ganz oder teilweise erzeugt werden. Falls die Verteilerstation eingerichtet ist, IP-Adressen zu erzeugen, erzeugt sie vorzugsweise zentral für jeden mit ihr verbundenen Datenträger eine IP-Adresse. Falls die IP-Adressen gemäß der IPv4-Adresskonvention erzeugt werden, erfolgt gegebenenfalls noch eine Adressübersetzung (NAT; "Network Address Translation") z.B. durch die Verteilerstation. Falls jedoch die IP-Adressen gemäß der IPv6-Adresskonvention erzeugt werden, ist eine Adressumsetzung selbst dann nicht notwendig, wenn das Schreibsystem in ein (gegebenenfalls offenes) Weitbereichsnetzwerk eingebettet ist, da die erzeugten IP-Adressen dann sogar global eindeutig sind.

Vorzugsweise werden als korrespondierende Schnittstelleneinrichtungen der Datenträger und einer Verteilerstation Hochgeschwindigkeitsschnittstellen verwendet, insbesondere USB-Schnittstellen, die als Sicherungsschicht (Protokollschicht 2 des ISO/OSI Referenzmodells) einen Netzwerkzugang für TCP/IP-Verbindungen zwischen einer Verteilerstation und den Datenträgern als Vermittlungs- bzw. Transportschicht (Protokollschichten 3 und 4 des ISO/OSI Referenzmodells) ermöglichen. Eine entsprechende TCP/IP-Verbindung zwischen der Zentralstation und einer Verteilerstation basiert demgegenüber vorzugsweise nicht auf USB-Verbindungen sondern ist eine herkömmliche TCP/IP-Verbindung, z.B. basierend auf einer Ethernet-(LAN)-Verbindung oder dergleichen. Die die Betriebsdaten bildenden IP-Datenpakete werden dann über jeweils durchgängige TCP/IP-Verbindungen von der Zentralstation zu allen mit ihr verbundenen Verteilerstationen gesendet und von jeder Verteilerstation zu den jeweils mit dieser verbundenen Datenträgern zum Einschreiben in einen dafür vorgesehenen Speicher weitergeleitet. Es wird also ein systemweit einheitliches Netzwerkdatenformat ermöglicht, das aus der IP-Adressierung (Protokollschicht 3 des ISO/OSI Referenzmodells) und den darauf aufbauenden höheren Protokollschichten besteht.

Das Einschreiben von Daten in den Speicher des portablen Datenträgers über eine TCP/ IP-Verbindung wird von einer Steuereinrichtung des Datenträgers unterstützt und kann über eine USB-Hochgeschwindigkeitsschnittstelle mit einer hohen Datenrate erfolgen (bis zu 12 MBit/s). An einer korrespondierenden USB-Schnittstelleneinrichtung der Verteilerstation kann entsprechend eine Vielzahl von Datenträgern angeschlossen werden, so dass aufgrund der Kombination aus paralleler Konnektivität und der hohen Datenrate der USB-Schnittstelle Betriebsdaten quasi-gleichzeitig in eine Vielzahl von Datenträgern eingeschrieben werden können.

Bei Verwendung einer USB-Verbindung zwischen einer Verteilerstation und einem Datenträger gibt es insbesondere die Möglichkeit, dass ein Datenträger über eine Netzwerkverbindung als eigenständiges Netzwerkgerät (und nicht als passives, lokales USB-Gerät) mit der Verteilerstation verbunden wird, so dass Betriebsdaten zur Initialisierung/Personalisierung des Datenträgers über eine geeignete Netzwerkoperation in die betreffenden Datenträger eingeschrieben werden können. Eine derartige Netzwerkverbindung zwischen der Verteilerstation und einer Vielzahl von Datenträgern wird z.B. von dem USB-Standard im Rahmen des Ethernet-Emulationsmoduls ("Ethernet Emulation Module") als eigene Geräteklasse ("Device Class") unterstützt (EEM/ CDC) und wird dementsprechend auch von einer Steuereinrichtung eines Datenträgers unterstützt. Über die USB-Verbindungen zwischen einer Verteilerstation und den Datenträgern werden also Ethernet-Verbindungen auf der Sicherungsschicht (Protokollschicht 2 des ISO/OSI Referenzmodells) ins Internet oder in ein anderes geeignetes Datenkommunikationsnetz emuliert, über die die Betriebsdaten in die betreffenden Datenträger gemäß dem TCP/ IP-Protokoll eingeschrieben werden können. In diesem Fall erzeugt ein Adressgenerator eines Datenträgers oder eine Verteilerstation veranlasst durch dessen Steuereinrichtung zusätzlich zu der IP-Adresse eine individuelle MAC-Adresse ("Media Access Control") für den betreffenden Datenträger, da die Verteilerstation Ethernet-Pakete und IP-Pakete gemäß verschiedener Protokollschichten an die MAC-Adresse und die IP-Adresse des Datenträgers sendet. Die MAC-Adresse repräsentiert insofern genau wie die IP-Adresse einen Teil der individuellen Adressierung, der von dem Datenträger bzw. von dessen Adressgenerator erzeugt werden kann, wobei die MAC-Adresse und die IP-Adresse auch von unterschiedlichen Geräten erzeugt werden können, z.B. die IP-Adresse von einer Verteilerstation und die MAC-Adresse von einem Datenträger.

Vorzugsweise werden die individuellen IP-Adressen bzw. individuellen MAC-Adressen von einem Adressgenerator jeweils aus einem entsprechenden IP-Adressraum bzw. MAC-Adressraum ausgewählt, den beispielsweise die zugehörige Steuereinrichtung nach Vorgaben der Zentralstation vorgibt. Während ein solcher MAC-Adressraum ein dem Datenträgerhersteller zugeordneter Bereich von MAC-Adressen ist, aus dem er neu hergestellten Geräten eine MAC-Adresse zuordnen kann, ergibt sich der IP-Adressraum aus dem genutzten Subnetzwerk (z.B. gemäß der IPv4- oder IPv6-Adresskonvention).

Eine Kommunikation zwischen dem Datenträger und dem Schreibsystem vor der Erzeugung der individuellen Adressierungen (d.h. bevor eine TCP/IP-Datenkommunikation mit logischer Adressierung möglich ist) kann auf der Ebene des USB-Protokolls über die USB-Verbindungen zu der betreffenden Verteilerstation erfolgen. Da die USB-Schnittstelleneinrichtungen (d.h. USB-Anschlüsse bzw. USB-Ports) der Datenträger für eine USB-Steuerung (d.h. einen USB Controller) der Verteilerstation unterscheidbar sind, können die Datenträger über ihre USB-Anschlüsse auch vor der Verfügbarkeit einer individuellen Adressierung einzeln angesprochen werden. Auf diese Weise kann die Verteilerstation dem Datenträger gegebenenfalls Informationen über die vorgegebenen Adressräume senden, oder Seriennummern der Datenträger erhalten. Ebenso kann eine Verteilerstation über die USB-Verbindung einen von ihr erzeugten Teil der individuellen Adressierung an den Datenträger senden (z.B. dessen IP-Adresse) oder einen von dem Datenträger erzeugten Teil der individuellen Adressierungen empfangen (z.B. die MAC-Adresse) und über die unterscheidbaren USB-Anschlüsse dem Datenträger zuordnen.

Es ist vorteilhaft, dass ein Adressgenerator die jeweiligen IP-Adressen und MAC-Adressen aus den betreffenden Adressräumen, die zumindest für alle mit der gleichen Verteilerstation verbundenen Datenträger identisch sind, möglichst statistisch gleichverteilt auswählt, so dass sich die den verschiedenen Datenträgern zugeordneten IP-Adressen und MAC-Adressen möglichst gar nicht bzw. lediglich sehr selten wiederholen. Dies kann beispielsweise dadurch erreicht werden, dass ein Adressgenerator die individuelle MAC-Adresse und/oder IP-Adresse basierend auf einer eindeutigen, möglichst zufälligen oder quasi-zufälligen Kennung des Datenträgers erzeugt, wie z.B. einer möglichst eindeutigen Seriennummer oder Identifikationsnummer des Datenträgers, z.B. der ICCSN ("Integrated Circuit Card Serial Number") des Datenträgers. Ebenso ist es möglich, IP- und/oder MAC-Adressen basierend auf einem Zufallsprozess zu erzeugen, der z.B. von einem Zufallsgenerator bereitgestellt wird. Dieses möglichst optimale Ausnutzen eines zur Verfügung stehenden Adressraums führt dann insbesondere dazu, dass ein Adressgenerator nicht nur IP- bzw. MAC-Adressen erzeugt, die bezüglich den zu dem betreffenden Zeitpunkt parallel mit der Verteilerstation verbundenen Datenträgern eindeutig und individuell sind, sondern sogar solche IP- bzw. MAC-Adressen erzeugt werden, die für (möglichst) alle von dem Schreibsystem (jemals) beschriebenen Datenträger eindeutig und individuell sind. Demzufolge ist es vorteilhaft, dass ein Adressgenerator selbst bei einem Neustart des Datenträgers (bzw. der Verteilerstation) vorher noch nicht verwendete MAC-Adressen bzw. IP-Adressen erzeugt, obwohl sich die Seriennummer des Datenträgers nicht geändert hat. Dies kann beispielsweise durch zusätzliche Verwendung einer Zufallszahl in der Adressierung erreicht werden.

Vorzugsweise authentisiert sich die Verteilerstation gegenüber dem jeweiligen Datenträger bzw. seiner Steuereinrichtung, bevor die Daten in den Speicher des Datenträgers eingeschrieben werden. Auf diese Weise gestattet die Steuereinrichtung eines Datenträgers ein Einschreiben von z.B. sicherheitsrelevanten Betriebsdaten im Rahmen einer Initialisierung/Personalisierung des Datenträgers nur dann, wenn es sich um eine vertrauenswürdige bzw. autorisierte Verteilerstation oder eine Verteilerstation eines vertrauenswürdigen bzw. autorisierten Schreibsystems handelt.

In bevorzugten Ausgestaltungen wird eine individuelle Adresse für den Datenträger nur für einen ersten Betriebsmodus des Datenträgers generiert, in einem zweiten Betriebsmodus wird dagegen eine feste, vorgegebene Adresse verwendet. Die feste Adresse kann für eine Gruppe von Datenträgern einheitlich sein. Somit kann insbesondere in der Personalisierungsphase für den Datenträger eine individuelle Adressierung mit Hilfe des ersten Betriebsmodus und in dem zweiten Betriebsmodus eine einheitliche Adresse verwendet werden. Eine irreversible Umschaltung des tragbaren Datenträgers vom ersten auf den zweiten Betriebsmodus kann vorzugsweise nach dem Ende der Personalisierungsphase erfolgen.

Obwohl das erfindungsgemäße Verfahren prinzipiell dazu geeignet ist, beliebige Daten in beliebige portable Datenträger einzuschreiben bzw. beliebige portable Datenträger zu initialisieren und/oder zu personalisieren oder auch sonstige Betriebsdaten bei der Herstellung von portablen Datenträgern in diese einzuschreiben, ist es besonders bevorzugt, mit einer USB-Schnittstelle ausgestattete Chipkarten (USB-Chipkarten) gemäß dem beschriebenen Verfahren durch ein Schreibsystem zu initialisieren und/oder zu personalisieren. Weitere Vorteile der Erfindung ergeben sich aus der folgenden Beschreibung verschiedener erfindungsgemäßer Ausführungsbeispiele und Ausführüngsalternativen. Es wird auf die folgenden Figuren verwiesen, welche zeigen:
- Figur 1: eine schematische Übersicht eines Initialisierungs-/Personalisierungssystems, bestehend aus einer Zentralstation, Verteilerstationen sowie mehreren Datenträgern;
- Figur 2: Datenträger, die mit einer Verteilerstation eines Schreibsystems in Verbindung stehen und die ihre individuellen Adressierungen jeweils selbst erzeugen;
- Figur 3: eine Verteilerstation, die mit einer Zentralstation und Datenträgern in Verbindung steht und die die individuellen Adressierungen der Datenträger erzeugt; und
- Figur 4: ein Flussdiagramm zum Einschreiben von Betriebsdaten in einen Datenträger als Netzwerkgerät.

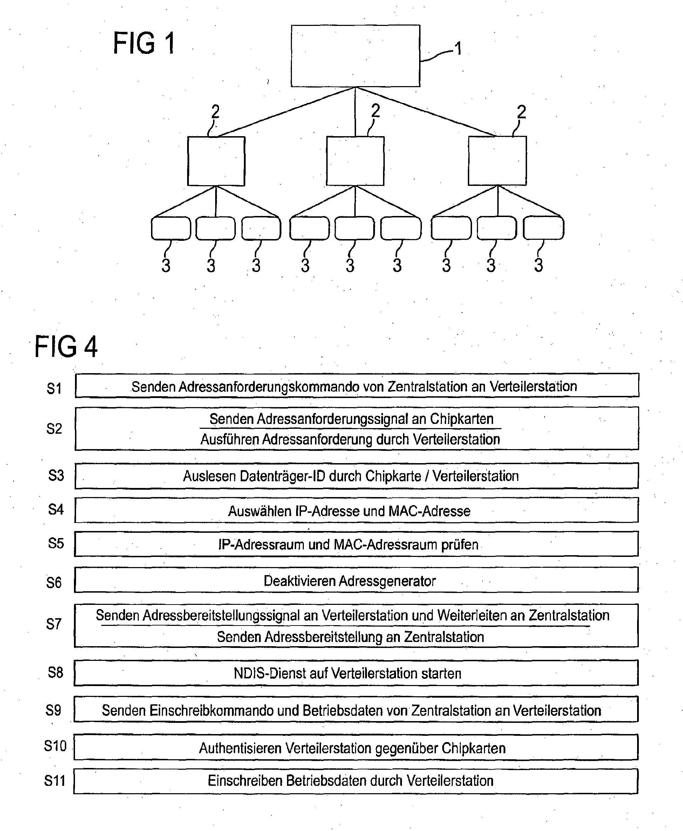

Fig.1 zeigt ein Initialisierungs-/Personalisierungssystem, das aus einer Zenitralstation 1 und mehreren mit der Zentralstation 1 verbundenen Verteilerstationen 2 besteht, an die jeweils eine Vielzahl von Chipkarten 3 angeschlossen sind. Die Chipkarten 3 werden durch das Initialisierungs-/ Personalisierungssystem (nachfolgend als "Schreibsystem" bezeichnet) initialisiert/ personalisiert, indem Initialisierung-/Personalisierungsdaten (nachfolgend als "Betriebsdaten" bezeichnet) von der Zentralstation 1 an die Verteilerstationen 2 übertragen werden und von den Verteilerstationen 2 an die mit ihnen jeweils verbundenen Datenträger 3 weitergeleitet werden. Das Schreibsystem der Fig.1 kann je nach der Art der Datenkommunikationsverbindungen zwischen der Zentralstation 1 und den Verteilerstationen 2 sowohl als lokales Netzwerk (LAN; "local area network") als auch als Weitbereichsnetzwerk (WAN; "wide area network") mit einer zentralen Zentralstation 1 und verteilten (dezentralen) Verteilerstationen 2 ausgestaltet sein.

An die in den Fig.1, 2 und 3 gezeigten Verteilerstationen 2 können über entsprechende Schnittstelleneinrichtungen 11 jeweils mehrere mit Betriebsdaten 6 in Form von Initialisierungs-/Personalisierungsdaten zu bestückende Chipkarten 3 angeschlossen werden. Auf diese Weise können die zu initialisierenden bzw. zu personalisierenden Chipkarten 3 gesteuert durch die Zentralstation 1 nach fertigungstechnischen oder datenverarbeitungstechnischen Vorgaben auf die einzelnen Verteilerstationen 2 aufgeteilt werden. Dementsprechend ist das Schreibsystem vorzugsweise in die sonstigen Herstellungsschritte einer Anlage zur Herstellung von Chipkarten 3 integriert.

Hierbei sind unter Initialisierungsdaten datenträgerunabhängige Daten zu verstehen, die zur Initialisierung der Chipkarten 3 verwendet werden, d. h. insbesondere das Betriebssystem oder zumindest Teile des Betriebssystems sowie datenträgerunabhängige Applikationen, Verwaltungsdaten oder dergleichen, wie z. B. die Komplettierungsdaten, die im Kontext der vorliegenden Erfindung ebenfalls unter den Begriff Initialisierungsdaten fallen. Demgegenüber sind Personalisierungsdaten personenindividuelle Daten, die eine Zuordnung zwischen einer Chipkarte 3 und demjenigen Endnutzer herstellen, für den die Chipkarte 3 bestimmt ist. Personalisierungsdaten können z.B. identifizierende Angaben sein, wie z.B. Name, Adresse und dergleichen. Das in Fig.1 skizzierte Schreibsystem kann insofern sowohl von einem Chipkartenhersteller integriert in den Chipkartenherstellungsprozess betrieben werden, als auch von einem Chipkartenherausgeber (z.B. einem Kreditinstitut oder dergleichen), der bereits initialisierte, fertig gestellte Chipkarten 3 personalisiert und an seine Endkunden weitergibt.

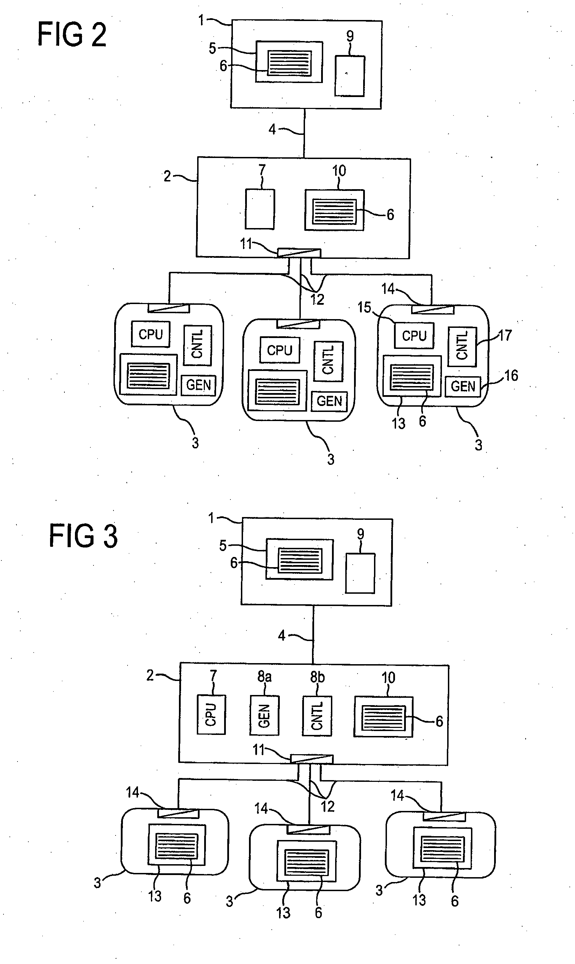

Die Fig. 2 und 3 zeigen jeweils ein solches Schreibsystem mit einer Zentralstation 1, einer Verteilerstation 2 und angeschlossenen Datenträgern 3 in größerem Detail. Die Zentralstation 1 umfasst einen Speicher 5, in den ein Chipkartenhersteller und/oder -herausgeber die in die Chipkarten 3 einzuschreibenden Betriebsdaten 6 ablegt. Die Zentralstation 1 umfasst ferner eine Schreibeinrichtung 9, die die Betriebsdaten 6 über eine Datenkommunikationsverbindung 4 nach vorgegebenen Kriterien an die Verteilerstationen 2 überträgt, welche die Betriebsdaten 6 gegebenenfalls in einem Speicher 10 zwischenspeichern und schließlich über Datenkommunikationsverbindungen 12 an die Chipkarten 3 weiterleitet und in die dafür vorgesehenen Speicher 13 einschreiben. In den nachfolgend beschriebenen Ausführungsformen initiiert und steuert vorzugsweise die Schreibeinrichtung 9 der Zentralstation 1 den Einschreibvorgang, während die Verteilerstationen 2 lediglich ausführende Funktion haben und die Betriebsdaten 6 auf Veranlassung der Schreibeinrichtung 9 in die von der Schriebeinrichtung 9 angegebenen Chipkarten 3 einschreiben. Deshalb muss zumindest die Zentralstation 1 die Datenträger 3 systemweit eindeutig adressieren können. Alternativ ist es auch möglich, dass die Zentralstation 1 die Betriebsdaten 6 an die Verteilerstationen 2 übergibt, die dann den Einschreibvorgang in die jeweils angeschlossenen Datenträger 3 weitgehend selbstständig durchführen.

Die Datenkommunikationsverbindung 4 zwischen der Zentralstation 1 und den Verteilerstationen 2 kann über ein beliebiges Datenkommunikationsnetzwerk bereitgestellt werden und ist vorzugsweise eine TCP/IP-Verbindung, z.B. über das Internet. Die Datenkommunikationsverbindung 4 ist vorzugsweise gegen Manipulation und Ausspähen kryptographisch oder anderweitig gesichert. Neben einer entsprechenden Schnittstelle für die Datenkommunikationsverbindung 4 verfügt jede einzelne Verteilerstation 2 über eine USB-Schnittstelleneinrichtung 11, über die eine Vielzahl von Chipkarten 3 an die jeweilige Verteilerstation 2 angeschlossen werden kann, so dass die Betriebsdaten 6 über die USB-Verbindungen 12 zu korrespondierenden USB-Schnittstellen 14 der Chipkarten 3 in den Speicher 13 der betreffenden Chipkarte 3 eingeschrieben werden.

Eine Verteilerstation 2 kann ein herkömmlicher Personalcomputer oder ein sonstiger Computer sein. Vorzugsweise ist die Verteilerstation 2 ein eingebettetes System ("Embedded System"), das beispielsweise in eine Herstellungsanlage für Chipkarten 3 oder dergleichen integriert ist. Insofern ist die Verteilerstation 2 mit den üblichen Komponenten eines Computers ausgestattet, wie z. B. einem Prozessor 7 (CPU), einer Einrichtung (nicht dargestellt) zum Weiterleiten von Betriebsdaten an die angeschlossenen Datenträger 3 sowie optional mit einem Speicher 10. Über die USB-Schnittstelleneinrichtung 11 der Verteilerstation 2 kann eine Vielzahl von zu initialisierenden/ personalisierenden Chipkarten 3 parallel an die Verteilerstation 2 angeschlossen werden.

Diese Chipkarten 3 sind vorzugsweise identisch oder zumindest gleichartig und werden gleichzeitig oder zumindest quasi-gleichzeitig initialisiert/ personalisiert. Sie umfassen jeweils eine korrespondierende USB-Schnittstelleneinrichtung 14 zum Aufbau einer USB-Verbindung 12 als Sicherungsschicht (Protokollschicht 2 des ISO/OSI Referenzmodells) zu der jeweiligen Verteilerstation 2, einen Prozessor 15 (CPU), einen nichtflüchtigen Speicher 13 zur Aufnahme der Betriebsdaten 6, z.B. in einen EEPROM-Speicher, Flash-Speicher, FeRAM-Speicher oder MARAM-Speicher, sowie weitere übliche Komponenten, wie z.B. einen RAM-Arbeitsspeicher und einen ROM-Speicher (nicht dargestellt).

Basierend auf den USB-Verbindungen 12 zwischen Verteilerstation 2 und Chipkarten 3 und auf einer herkömmlichen Ethernet/LAN-Verbindung 4 zwischen Zentralstation 1 und Verteilerstation 2 wird eine durchgängige TCP/IP-Verbindung zwischen der Zentralstation 1 und den Chipkarten 1 aufgebaut über die diese von der Zentralstation 1 initialisiert/personalisiert werden können. Die Betriebsdaten 6 werden somit als IP-Datenpakete über die durchgängige TCP/IP-Verbindung von der Zentralstation 1 bzw. ihrer Schreibeinrichtung 9 unter Vermittlung der Verteilerstation 2 an die betreffende Chipkarte 3 übertragen. Hierfür verwendet die Zentralstation 1 eine schreibsystemweit einheitliche, individuelle Adressierung jeder Chipkarte 3, die zumindest eine systemweit eindeutige IP-Adresse und eine systemweit eindeutige MAC-Adresse ("Media Access Control") umfasst, da die Chipkarte 3 IP-Pakete über die IP-Adresse (Protokollschicht 3 des ISO/OSI Referenzmodells) und Ethernet-Pakete über die MAC-Adresse (Protokollschicht 2 des ISO/OSI Referenzmodells) empfängt.

Gemäß dem verwendeten mehrschichtigen TCP/ IP-Kommunikationsprotokoll ist die individuelle Adressierung der Chipkarte 3 also eine mehrteilige Adressierung, die Adressen für verschiedene Protokollschichten des Kommunikationsprotokolls bereitstellt. Diese Adressen, die die individuelle Adressierung bilden, sind jeweils zumindest bezüglich der zu einem bestimmten Zeitpunkt über die USB-Schnittstelle 11 an der Verteilerstation 2 gleichzeitig angeschlossenen Chipkarten 3 paarweise unterschiedlich und systemweit eindeutig, vorzugsweise sind sogar die Adressen aller über einen längeren Zeitraum von dem Schreibsystem bearbeiteten Chipkarten 3 paarweise unterschiedlich, so dass Adressierungskonflikte grundsätzlich vermieden werden können.

Die IP-Adresse oder die MAC-Adresse kann sowohl von der betreffenden Chipkarte 3 als auch von der Verteilerstation 2 erzeugt werden. Fig. 2 illustriert den Fall, dass die Chipkarte 3 eine IP- und eine MAC-Adresse für sich selbst erzeugt, während Fig. 3 den Fall illustriert, dass die Verteilerstation 2 eine IP- und eine MAC-Adresse für eine angeschlossene Chipkarte 2 erzeugt. Zusätzlich gibt es noch den (nicht illustrierten) Fall, dass jeweils ein Teil der individuellen Adressierung (z.B. jeweils eine Adresse) von der Chipkarte 3 und der Verteilerstation 2 erzeugt wird.

Zur Erzeugung zumindest eines Teils der individuellen Adressierung und zur Steuerung des Einschreibens umfassen die in Fig. 2 gezeigten Chipkarten 3 jeweils eine Steuereinrichtung 17 (CNTL) und einen von der Steuereinrichtung 17 aktivierbaren Adressgenerator 16 (GEN). Vorzugsweise sind die Steuereinrichtung 17 und der Adressgenerator 16 als auf dem Prozessor ausführbare Softwarekomponenten der Chipkarte 3 ausgestaltet. Der Adressgenerator 16 umfasst einen Zufallszahlengenerator oder kann einen ohnehin auf der Chipkarte 3 vorhandenen Zufallsgenerator nutzen, der als Basis für die Erzeugung einer individuellen Adressierung mittels eines möglichst gleichverteilten stochastischen Prozesses eine Zufallszahl für den Adressgenerator 16 bereitstellt. Die IP-Adresse und/oder die MAC-Adresse der betreffenden Chipkarte 3 wird dann durch den Adressgenerator 16 mittels einer Abbildung der Zufallszahl in den jeweils für derartige Adressierungen zur Verfügung stehenden Adressraum gebildet, wobei verschiedene Zufallszahlen vorzugsweise nicht auf gleiche Adressierungen abgebildet werden. Auf diese Weise kann weitgehend ausgeschlossen werden, dass sich Adressierungen wiederholen und zu Adresskonflikten führen.

Der Adressraum ist für jede Chipkarte 3 vorzugsweise identisch und wird der Steuereinrichtung 17 von der Verteilerstation 2 bzw. der Zentralstation 1 vorgegeben. Diese Kommunikation zwischen der Verteilerstation 2 und einer Chipkarte 3 erfolgt über die USB-Verbindung 12 auf der Ebene des USB-Protokolls, indem die jeweiligen physikalischen USB-Anschlüsse 11, 14 (und nicht die betreffenden logischen Geräte) durch entsprechende Signale angesprochen werden. Auf diese Weise wird auch der von einem Adressgenerator 16 erzeugte Teil der individuellen Adressierung von der jeweiligen Steuereinrichtung 17 über die USB-Verbindung 12 an die Verteilerstation 2 übertragen bzw. von dieser angefordert oder abgefragt.

Fig. 3 zeigt eine Verteilerstation 2, die zusätzlich zu den im Zusammenhang mit Fig. 2 beschriebenen Komponenten eine Steuereinrichtung 8b (CNTL) hat, die den von der Schreibeinrichtung 9 der Zentralstation 1 initiierten Einschreibprozess koordiniert, indem sie Betriebsdaten 6 von der Zentralstation 1 über die Datenkommunikationsverbindung 4 empfängt und an die Chipkarten 3 weiterleitet. Zur Erzeugung eines Teils der individuellen Adressierungen der jeweils über die USB-Schnittstelleneinrichtung 11 angeschlossenen Chipkarten 3 umfasst die Verteilerstation 2 einen Adressgenerator 8a (GEN), der systemweit eindeutige MAC-Adressen und/oder IP-Adressen erzeugt, z.B. basierend auf einer Zufallszahl. Darüber hinaus kann der Adressgenerator 8a der Verteilerstation 2 in der gleichen Weise ausgestaltet sein, wie es oben im Zusammenhang mit dem Adressgenerator 16 der Chipkarten 3 beschrieben ist.

Figur 4 zeigt ein Flussdiagram eines Verfahrens, bei dem Chipkarten 3 als Netzwerkgeräte über eine (emulierte) Ethernet-Netzwerkverbindung von der Verteilerstation 2 angesprochen werden können. Hierbei wird zum Einschreiben der Betriebsdaten 6 durch die Zentralstation 1 in einen Speicher 13 einer Chipkarten 3 eine durchgängige TCP/IP-Verbindung zwischen der Zentralstation 1 und der Chipkarte 3 über die Verteilerstation 2 aufgebaut, um die Betriebsdaten 6 gemäß dem TCP/IP-Protokoll einzuschreiben. Die TCP/IP-Verbindung über die Kommunikationsverbindung 4 zwischen der Zentralstation 1 und der Verteilerstation 2 basiert dabei auf einer Ethernet-LAN-Verbindung, während die TCP/IP-Verbindung über die USB-Verbindung 12 zwischen der Verteilerstation 2 und den Chipkarten 3 auf einer emulierten Ethernet-Verbindung basiert, die von dem USB-Standard im Rahmen des Ethernet-Emulationsmoduls ("Ethernet Emulation Module") als eigene Geräteklasse ("Device Class") unterstützt wird (EEM/CDC).

Die Fig. 4 berücksichtigt die beiden Ausführungsvarianten des Erzeugens der individuellen Adressierungen durch jede einzelne Chipkarte 3 (gemäß Fig. 2) und zentralisiert durch die Verteilerstation 2 (gemäß Fig. 3). Die beiden Verfahrensvarianten sind in den betreffenden Verfahrensschritten S2, S3 und S7 durch Quer- oder Längsstriche verdeutlicht. Darüber hinaus gibt es die dritte Verfahrensvariante der teilweisen Erzeugung der individuellen Adressierungen durch jeweils die Verteilerstation 2 und eine Chipkarte 3. Dies ist beispielsweise bei einer zentralen Erzeugung der IP-Adressen durch die Verteilerstation 2 und einer dezentralen Erzeugung der MAC-Adressen durch die einzelnen Chipkarten 3 der Fall. Auf eine genaue Beschreibung einer derartigen Hybridlösung kann jedoch verzichtet werden, da sie sich unmittelbar aus den die Verteilerstation 2 oder die Chipkarten 3 betreffenden Einzelschritten des in Fig. 4 illustrierten Verfahrens ergibt. Die hierzu notwendige vorbereitende und koordinierende Kommunikation zwischen der Verteilerstation 2 und einer Chipkarte 3 wird über die USB-Verbindung 12 auf der Ebene des USB-Protokolls durchgeführt.

In Schritt S1 wird ein Adressanforderungskommando von der Schreibeinrichtung 9 der Zentralstation 1 über die Datenkommunikationsverbindung 4 an die Verteilerstation 2 geschickt, das eine Erzeugung von individuellen Adressierungen der angeschlossenen Chipkarten 3 anweist. Das Adressanforderungskommando wird dabei über die Datenkommunikationsverbindung 4 gemäß einem mehrschichtigen Kommunikationsprotokoll an die Verteilerstation 2 gesendet, vorzugsweise gemäß dem TCP/IP-Protokoll. Durch das Adressanforderungskommando der Schreibeinrichtung 9 wird die Verteilerstation 2 entweder veranlasst, ein Adressanforderungssignal an die Chipkarten 3 zu richten, damit diese ihre individuellen Adressierungen erzeugen. Alternativ kann das Adressanforderungskommando eine an die Verteilerstation gerichtete Adressanforderung umfassen, die individuellen Adressierungen aller an der Verteilerstation 2 angeschlossenen Chipkarten 3 zu erzeugen. Die Verteilerstation 2 bereitet daraufhin die Ausführung des empfangenen Adressanforderungskommandos vor.

Zu diesem Zweck sendet die Verteilerstation 2 in Schritt S2 für den Fall, dass die individuellen Adressierungen von den Chipkarten 3 zu erzeugen sind, über die USB-Verbindungen 12 ein Adressanforderungssignal an jede der angeschlossenen Chipkarten 3 bzw. deren Steuereinrichtungen 17 und initiiert dadurch das Erzeugen der jeweiligen individuellen Adressierungen durch die einzelnen Adressgeneratoren 16 der betreffenden Chipkarten 3 (vgl. Fig. 2). Da zu diesem Zeitpunkt über die USB-Verbindungen 12 noch keine TCP/IP-Kommunikation mit logischer Adressierung etabliert ist, erfolgt das Adressanforderungssignal auf der Ebene des USB-Protokolls über die USB-Verbindung 12, da ein USB-Controller (nicht dargestellt) der Verteilerstation 2 die einzelnen USB-Anschlüsse 14 der Chipkarten 3 über physikalische Anschlussadressen ansprechen kann. Demgegenüber wird in Schritt S2 für den Fall, dass das Einschreibkommando der Zentralstation 1 eine an die Verteilerstation 2 gerichtete Adressanforderung umfasst, diese von der Steuereinrichtung 8b und dem Adressgenerator 8a der Verteilerstation 2 ausgeführt (vgl. Fig. 3).

In Schritt S3 reagiert die Steuereinrichtung 17 einer Chipkarte 3 bzw. die Steuereinrichtung 8b der Verteilerstation 2 auf die Adressanforderung der Zentralstation 1, indem eine die betreffende Chipkarte 3 identifizierende Kennung als Grundlage für die Erzeugung einer individuellen Adressierung durch den entsprechenden Adressgenerator 16 bzw. 8a ausgelesen wird. Gegebenenfalls wird diese Seriennummer von der Verteilerstation 2 auf der Ebene des USB-Protokolls aus dem betreffenden Chipkarten-Speicher ausgelesen, sofern vorgesehen ist, dass die Verteilerstation 2 einen Teil oder die gesamten individuellen Adressierungen der angeschlossenen Chipkarten 3 erzeugt.

Die Chipkarten-Kennungen erfüllen prinzipiell die gleichen Voraussetzungen, wie die im Zusammenhang mit den Figuren 2 und 3 genannten Zufallszahlen eines Zufallsgenerators. Bei den individuellen Kennungen kann es sich um beliebige Chipkarten-Identifikationen handeln, vorzugsweise um eine aus einem "Serial Number Register" (0x000f0004 und 0x000f0008) einer Chipkarte 3 auslesbare Seriennummer. Eine derartige eindeutige Chipkarten-Identifikation kann beispielsweise die ICCSN ("Integrated Circuit Card Serial Number") der Chipkarte 3 sein.

Für die Anbindung der Chipkarten 3 als Netzwerkgeräte über die USB-Verbindungen 12 bietet der USB-Standard mit dem "Ethernet Emulation Module" (EEM) als Geräteklasse ("Class Definition for Communication Devices"; CDC) die Möglichkeit, ein Ethernet-Netzwerk über die USB-Schnittstelleneinrichtungen 11, 14 aufzubauen. Das EEM führt hierbei eine Einkapselung von Ethernet-Datenblöcken zum Transport über die USB-Verbindungen 12 durch. Hierzu werden die MAC-Adressen ("Media Access Control") der einzelnen Chipkarten 3 zur Adressierung über die emulierten Ethernet-Verbindungen 12 verwendet.

In den Schritten S4 und S5 wird von dem durch die Steuereinrichtung 17 bzw. 8b aktivierten Adressgenerator 16 bzw. 8a für die betreffende Chipkarte 3 eine individuelle IP-Adresse und eine individuelle MAC-Adresse aus der zuvor ausgelesenen Chipkarten-Identifikation errechnet, die zusammen die mehrteilige, individuelle Adressierung der betreffenden Chipkarte 3 gemäß dem verwendeten mehrschichtigen Kommunikationsprotokoll bilden. Während die MAC-Adresse benötigt wird, damit die Verteilerstation 2 auf der Protokollschicht 2 des ISO/OSI-Referenzmodells Ethernet-Pakete an die Chipkarte 3 senden kann, dient die IP-Adresse dazu, einer Chipkarte 3 in dem vorliegenden IP-Subnetz auf der Protokollschicht 3 des ISO/OSI-Referenzmodells IP-Betriebsdatenpakete zu senden. Die IP-Adresse ist insofern nicht physikalisch sondern lediglich logisch an das betreffende Gerät gebunden. Die IP-Adressen der Chipkarten 3 können sowohl dezentral von den einzelnen Chipkarten 3 als auch zentral von der Verteilerstation 2 erzeugt werden, während die IP-Adresse der Verteilerstation 2 selbst, sofern diese nicht als Router fungiert, der lediglich Betriebsdatenpakete von der Zentralstation 1 an die Chipkarten 3 weiterleitet, beispielsweise mittels eines DHCP-Servers ("Dynamic Host Configuration Protocol") konfiguriert werden kann.

Falls die IP-Adressen von der Verteilerstation 2 erzeugt werden und die MAC-Adressen von den einzelnen Chipkarten 3, werden die beiden Adressen zum Bilden einer individuellen Adressierung, die zur Adressierung gemäß dem verwendeten mehrschichtigen Kommunikationsprotokoll geeignet ist, durch eine entsprechende Kommunikation auf der Ebene des USB-Protokolls über die USB-Verbindung 12 zusammengeführt.

Die MAC-Adresse und die IP-Adresse werden dazu von dem Adressgenerator 16 bzw. 8a derart ausgewählt, dass sie in einem zur Verfügung stehenden MAC-Adressraum bzw. IP-Adressraum liegen (Schritt S5). Eine entsprechende Information über den vorgegebenen MAC- bzw. IP-Adressraum wird gegebenenfalls von der Zentralstation 1 über die TCP/IP-Verbindung 4 an die Verteilerstation 2 gesendet und von dieser an die Steuereinrichtung 17 der Chipkarte 3 (z.B. im Rahmen des Adressanforderungssignals in Schritt S2) gesendet oder der eigenen Steuereinrichtung 8b zur Nutzung bereitgestellt.

Der MAC-Adressraum ist ein dem betreffenden Chipkartenhersteller zugewiesenes Kontingent an reservierten Adressen, z. B. 00 90 D3 xx xx xx. Die eindeutige IP-Adresse wird hingegen aus einem IP-Adressraum eines lokalen Subnetzes ausgewählt, das für die Initialisierung/Personalisierung der Chipkarten 3 verwendet wird. Hierbei wählt der Adressgenerator 16 bzw. 8a in den Schritten S4 und S5 die MAC-Adresse bzw. die IP-Adresse vorzugsweise derart (statistisch gleichverteilt) aus, dass der volle MAC-Adressraum bzw. der volle IP-Adressraum ausgenutzt wird, bevor für eine Chipkarten-Identifikation eine bereits vorher vergebene MAC-Adresse bzw. IP-Adresse erneut vergeben wird.

Anschließend kann der Adressgenerator 16 bzw. 8a von der Steuereinrichtung 17 bzw. 8b in Schritt S6 deaktiviert werden. Sofern die individuelle Adressierung (bzw. nur die MAC-Adresse) von den einzelnen Chipkarten 3 erzeugt wurde, wird diese in Schritt S7 von der Steuereinrichtung 17 der Chipkarte 2 in Form eines das Adressanforderungssignal (Schritt S2) beantwortenden Adressbereitstellungssignals über die USB-Verbindung 12 an die Verteilerstation 2 übermittelt. Die Verteilerstation 2 leitet die auf diese Weise eintreffenden individuellen Adressierungen aller Chipkarten 3 an die Zentralstation 1 und insbesondere deren Schreibeinrichtung 9 weiter. Sofern die individuelle Adressierung (bzw. nur die IP-Adresse) von der Verteilerstation 2 erzeugt wurde, wird diese an die betreffende Chipkarte 3 und die Zentralstation 1 gesendet. In jedem Falle wird die Schreibeinrichtung 9 der Zentralstation 1 dadurch in die Lage versetzt, das Einschreiben (Schritte S9 bis S11) der Betriebsdaten 6 in die Speicher 13 der Chipkarte 3 vorzunehmen, da die Chipkarten 3 nun über die erzeugten Adressierungen im Rahmen einer durchgängigen TCP/IP-Verbindung 4, 12 von der Zentralstation 1 schreibsystemweit eindeutig logisch adressierbar sind.

Zum Aufbau dieser durchgängigen TCP/IP-Verbindung 4,12 wird in Schritt S8 ein NDIS-Dienst ("Network Driver Interface Specification") auf der als "Embedded System" ausgestalteten Verteilerstation 2 gestartet, der eine logische Schnittstelle zwischen der emulierten Ethernet-Verbindung mit MAC-Adressierung auf der Sicherungsschicht (Protokollschicht 2 des ISO/ OSI Referenzmodells) und der darauf aufsetzenden TCP/IP-Datenkommunikation mit IP-Adressierung auf der Vermittlungsschicht (Protokollschicht 3 des ISO/OSI Referenzmodells) bildet.

In Schritt S9 werden die einzuschreibenden Betriebsdaten 6 in Form von IP-Datenpaketen von der Schreibeinrichtung 9 der Zentralstation 1 über die Datenkommunikationsverbindung 4 zusammen mit einem Einschreibkommando an die Verteilerstation 2 geschickt, das die Verteilerstation 2 anweist, die Betriebsdaten 6 in die Speicher 13 der angeschlossenen Chipkarten 3 einzuschreiben. Das Einschreibkommando kann der Verteilerstation 2 dabei die individuellen Adressen der betreffenden Chipkarten 3 vorgeben, in die die Betriebsdaten 6 einzuschreiben sind.

In Schritt S10 authentisiert sich die Verteilerstation 2 gegenüber den Chipkarten 3, in die die Betriebsdaten 6 eingeschrieben werden sollen. Dadurch stellt die Chipkarte 3 sicher, dass die Verteilerstation 2 zum Einschreiben von Daten in die Chipkarte 3 berechtigt ist. Die Authentisierung kann beispielsweise eine kryptographische Authentisierung sein, eine PIN-Prüfung oder eine Zertifikatprüfung.

Abschließend werden in Schritt S11 die Betriebsdaten 6 von der Schreibeinrichtung 9 in die Speicher 13 der jeweils individuell adressierbaren Chipkarten 3 eingeschrieben, indem das Einschreibkommando von der Verteilerstation 2 ausgeführt wird. Im einfachsten Fall wird das Einschreibkommando von der Verteilerstation 2 ausgeführt, indem die empfangenen Betriebsdaten 6 lediglich an die in dem Einschreibkommando genannte individuelle Adressierung weitergeleitet werden. Das Einschreibkommando umfasst dann alle für den Einschreibvorgang wesentlichen Angaben. Hierbei kann die Verteilerstation insbesondere als Router fungieren, der keine eigene IP-Adresse besitzt und die Betriebsdaten 6 lediglich weisungsgemäß weiterleitet. Alternativ kann auch eine aktive Umsetzung des Einschreibkommandos von der Verteilerstation 2 vorgesehen sein, beispielsweise indem die Verteilerstation 2 die betreffenden Chipkarten über ihre IP- und/oder MAC-Adressen selbständig adressiert und nicht nur die von der Zentralstation 1 vorgegebenen Adressierungen übernimmt. In jedem Falle können derartige Einschreibprozesse von dem Betriebssystem (nicht dargestellt) der Verteilerstation 2 quasi-gleichzeitig ausgeführt werden, indem die einzelnen Schreibvorgänge von einem Multitasking-Betriebssystem nebenläufig ausgeführt werden.

Selbstverständlich ist die in Fig. 4 genannte Schrittabfolge nicht die einzige Realisierungsmöglichkeit des erfindungsgemäßen Verfahrens. Vielmehr sind auch andere Schrittabfolgen denkbar und eventuell notwendig. Zum Beispiel kann die Deaktivierung eines Adressgenerators (Schritt S6) auch unmittelbar vor oder nach dem Einschreiben der Betriebsdaten 6 (Schritt S11) erfolgen. Ebenso ist auch das Einrichten des NDIS-Dienstes (Schritt S8) und das Senden der Betriebsdaten (Schritt S9) vertauschbar.

Darüber hinaus ist auch denkbar, dass der Einschreibprozess nicht, wie in Fig. 4 illustriert, aus separaten Adressanforderungs- (Schritte S1 bis S7) und Einschreibphasen (Schritte S8 bis S11) besteht, sondern diese beiden zentralen Schrittfolgen ineinander verzahnt sind. Beispielsweise können initial ein Einschreibkommando, die Betriebsdaten und eine Adressanforderung gleichzeitig an die Verteilerstation 2 gesendet werden, so dass die Verteilerstation 2 nach Erzeugung der individuellen Adressierungen die Betriebsdaten ohne eine weitere Kommunikation mit der Zentralstation 1 selbständig in die betreffenden Chipkarten 3 einschreibt.

In jedem Fall ist das Verfahren gemäß Fig. 4 nicht auf USB-Chipkarten beschränkt, sondern kann auf beliebige portable Datenträger und beliebige Datenkommunikationsverbindungen zwischen einer Verteilerstation 2 und portablen Datenträgern 3 übertragen werden.

## Patentansprüche

1. Verfahren zum Einschreiben (S9, S11) von Betriebsdaten (6) durch ein Schreibsystem (1, 2) in Datenträger (3) im Rahmen einer Herstellung der Datenträger (3), wobei die Betriebsdaten (6) Initialisierungs- und/ oder Personalisierungsdaten sind, wobei das Schreibsystem (1, 2) eine Zentralstation (1) und mehrere mit der Zentralstation (1) verbundene Verteilerstationen (2) umfasst und wobei mit zumindest einer der Verteilerstationen (2) mehrere der Datenträger (3) verbunden sind, umfassend:
ein Senden (S9) der Betriebsdaten (6) von der Zentralstation (1) über die zumindest eine Verteilerstation (2) an einen der mehreren Datenträger (3), wobei für den Datenträger (3) eine individuelle Adressierung erzeugt wird (S4, S5), über die der Datenträger (3) beim Einschreiben (S9, S11) der Betriebsdaten (6) schreibsystemweit eindeutig adressierbar ist und
die Betriebsdaten von der Zentralstation (1) über die Verteilerstation (2) zu dem Datenträger (3) gemäß einem einheitlichen Kommunikationsprotokoll weitergeleitet wird, wobei in diesem Kommunikationsprotokoll die schreibsystemweit eindeutige Adressierung durchgängig eingesetzt wird.

2. Verfahren nach Anspruch 1, wobei
- für jeden einer Vielzahl von mit zumindest einer Verteilerstation (2) des Schreibsystems (1, 2) verbunden Datenträgern (3) eine individuelle Adressierung erzeugt wird (S4, S5), die paarweise verschieden zu allen anderen für die Vielzahl von Datenträgern (3) erzeugten individuellen Adressierungen ist; und
- die Betriebsdaten (6) durch Adressieren jedes der Vielzahl von Datenträgern (3) mittels dessen individueller Adressierung durch die Zentralstation (1) in die Vielzahl von Datenträger (3) quasi-gleichzeitig eingeschrieben werden (S9, S11).

3. Verfahren nach Anspruch 1 oder 2, wobei eine zumindest zwei Adressen umfassende individuelle Adressierung zum schreibsystemweit eindeutigen Adressieren des Datenträgers (3) gemäß einem mehrschichtigen Kommunikationsprotokoll erzeugt wird (S4, S5), wobei jede der zumindest zwei Adressen der individuellen Adressierung zum systemweit eindeutigen Adressieren des Datenträgers (3) über jeweils eine Protokollschicht des mehrschichtigen Kommunikationsprotokolls geeignet ist und von dem Datenträger (3) oder der Verteilerstation (2) erzeugt wird (S4, S5).

4. Verfahren nach einem der Ansprüche 1 bis 3, wobei zum schreibsystemweit eindeutigen Adressieren des Datenträgers (3) über eine durchgängige TCP/IP-Verbindung (4,12) gemäß dem TCP/IP-Kommunikationsprotokoll zwischen der Zentralstation (1) und dem Datenträger (3) eine individuelle Adressierung erzeugt wird (S4, S5), die zumindest eine schreibsystemweit eindeutige, datenträgerindividuelle IP-Adresse des Datenträgers (3) umfasst.

5. Verfahren nach einem der Ansprüche 1 bis 4, wobei die Adresse des Datenträgers (3) basierend auf einer individuellen Kennung des Datenträgers (3) oder basierend auf einer Zufallszahl erzeugt wird (S4, S5), oder dass die Adresse derart gleichverteilt aus einem vorgegebenen Adressraum ausgewählt wird (S5), dass sie sich möglichst selten wiederholt.

6. Verfahren nach einem der Ansprüche 4 oder 5, wobei die IP-Adresse von dem Datenträger (3) erzeugt wird (S4, S5) und zumindest an die Verteilerstation (2), mit der der Datenträger (3) verbunden ist, übermittelt wird (S7) oder dass die IP-Adresse von der Verteilerstation (2), mit der der Datenträger (3) verbunden ist, erzeugt wird (S4, S5) und zumindest an die Zentralstation (1) übermittelt wird (S7).

7. Verfahren nach einem der Ansprüche 4 bis 6, wobei eine durchgängige TCP/IP-Verbindung (4,12) von der Zentralstation (1) über die Verteilerstation (2) zu dem Datenträger (3) aufgebaut wird (S8) und die Betriebsdaten (6) mittels einer Netzwerkoperation gemäß dem TCP/ IP-Protokoll von der Zentralstation (1) mittels der erzeugten individuellen Adressierung über die Verteilerstation (2) in den Datenträger (3) eingeschrieben werden (S9, S11).

8. Verfahren nach einem der Ansprüche 1 bis 7, wobei eine USB-Verbindung (12) zwischen der Verteilerstation (2) und dem Datenträger (3) aufgebaut wird und die Betriebsdaten (6) von der Zentralstation (1) an die Verteilerstation (2) gesendet werden (S9) und von der Verteilerstation (2) über die USB-Verbindung (12) in einen Speicher (13) des Datenträgers (3) eingeschrieben werden (S11).

9. Verfahren nach Anspruch 8, wobei eine individuelle Adressierung erzeugt wird (S4, S5), die zumindest eine schreibsystemweit eindeutige, datenträgerindividuelle MAC-Adresse des Datenträgers (3) umfasst, über die der Datenträger (3) von der Verteilerstation (2) über die USB-Verbindung (12) eindeutig adressierbar ist.

10. Verfahren nach Anspruch 9, wobei die MAC-Adresse von dem Datenträger (3) erzeugt wird (S4, S5) und an die Verteilerstation (2), mit der der Datenträger (3) verbunden ist, übermittelt wird (S7) oder dass die MAC-Adresse von der Verteilerstation (2), mit der der Datenträger (3) verbunden ist, erzeugt wird (S4, S5) und zumindest an die Zentralstation (1) übermittelt wird (S7).

11. Schreibsystem (1, 2) zum Einschreiben von Betriebsdaten (6) in portable Datenträger (3), wobei die Betriebsdaten (6) Initialisierungs- und/ oder Personalisierungsdaten sind, wobei das Schreibsystem (1,2) eine Zentralstation (1) und mehrere mit der Zentralstation (1) verbundene Verteilerstationen (2) umfasst, wobei mit zumindest einer der Verteilerstationen (2) mehrere der Datenträger (3) verbunden sind, und das Schreibsystem eingerichtet ist, die Betriebsdaten (6) von der Zentralstation (1) über die zumindest eine Verteilerstation (2) an einen der mehreren Datenträger (3) zu senden wobei für den Datenträger (3) eine individuelle Adressierung erzeugt wird (S4, S5), über die der Datenträger (3) beim Einschreiben (S9, S11) der Betriebsdaten (6) schreibsystemweit eindeutig adressierbar ist und die Betriebsdaten von der Zentralstation (1) über die Verteilerstation (2) zu dem Datenträger (3) gemäß einem einheitlichen Kommunikationsprotokoll weitergeleitet wird, wobei in diesem Kommunikationsprotokoll die schreibsystemweit eindeutige Adressierung durchgängig eingesetzt wird.

12. Schreibsystem (1, 2) nach Anspruch 11 wobei das Schreibsystem eingerichtet ist zur Ausführung eines Verfahrens nach einem der Ansprüche 2 bis 12.

13. Schreibsystem (1, 2) nach Anspruch 11 oder 12 wobei die portablen Datenträger (3), zumindest einen Prozessor (15), einen Speicher (13) sowie eine Schnittstelleneinrichtung (14) umfassen und einen Adressgenerator (16), der eingerichtet ist, zumindest einen Teil der individuellen Adressierung zu erzeugen, aufweisen.

14. Schreibsystem (1, 2) nach einem der Ansprüche 11 bis 13 wobei der Datenträger (3) eine Chipkarte, Smart Card, Mobilfunkkarte oder sichere Multimediakarte ist.

15. Schreibsystem (1, 2) nach einem der Ansprüche 11 bis 14 wobei die Verteilerstation (2) zum Weiterleiten von Betriebsdaten (6), die von der Zentralstation (1) in den mit der Verteilerstation verbundenen portablen Datenträger (3) eingeschrieben werden, einen Adressgenerator (8a) umfasst, der eingerichtet ist, zumindest einen Teil der individuellen Adressierung zu erzeugen.

## Claims

1. A method for the writing (S9, S11) of operating data (6) by a writing system (1, 2) to data carriers (3) within the framework of a manufacture of the data carriers (3), wherein the operating data (6) are initialization data and/or personalization data, wherein the writing system (1, 2) comprises a central station (1) and several distribution stations (2) connected to the central station (1), and wherein several of the data carriers (3) are connected to at least one of the distribution stations (2), comprising:
a sending (S9) of the operating data (6) from the central station (1) via the at least one distribution station (2) to one of the several data carriers (3), wherein for the data carrier (3) an individual addressing is generated (S4, S5), via which the data carrier (3) can be uniquely addressed writing-system-wide upon writing (S9, S11) the operating data (6), and
the operating data are forwarded from the central station (1) via the distribution station (2) to the data carrier (3) in accordance with a uniform communication protocol, wherein in this communication protocol the writing-system-wide unique addressing is used throughout.

2. The method according to claim 1, wherein for each of the plurality of data carriers (3) connected to at least one distribution station (2) of the writing system (1, 2) an individual addressing is generated (S4, S5), which is pairwise different from all other individual addressings generated for the plurality of data carriers (3); and, by addressing each of the plurality of data carriers (3) by means of its individual addressing, the operating data (6) are written (S9, S11) quasi-simultaneously by the central station (1) to the plurality of data carriers (3).

3. The method according to claim 1 or 2, wherein an individual addressing comprising at least two addresses is generated (S4, S5) for the writing-system-wide unique addressing of the data carrier (3) in accordance with a multi-layer communication protocol, wherein each of the at least two addresses of the individual addressing is suitable for the system-wide unique addressing of the data carrier (3) via respectively one protocol layer of the multi-layer communication protocol, and is generated (S4, S5) by the data carrier (3) or by the distribution station (2).

4. The method according to any of the claims 1 to 3, wherein for the writing-system-wide unique addressing of the data carrier (3) via a consistent TCP/IP connection (4, 12) in accordance with the TCP/IP communication protocol between the central station (1) and the data carrier (3) an individual addressing is generated (S4, S5) which comprises at least one writing-system-wide unique, data-carrier-individual IP address of the data carrier (3).

5. The method according to any of the claims 1 to 4, wherein the address of the data carrier (3) is generated (S4, S5) on the basis of an individual identification of the data carrier (3) or on the basis of a random number, or that the address is chosen (S5) from a predetermined address space in such an equally distributed fashion that it recurs as rarely as possible.

6. The method according to any of the claims 4 or 5, wherein the IP address is generated (S4, S5) by the data carrier (3) and is transmitted (S7) at least to the distribution station (2) to which the data carrier (3) is connected, or that the IP address is generated (S4, S5) by the distribution station (2) to which the data carrier (3) is connected and is transmitted (S7) at least to the central station (1).

7. The method according to any of the claims 4 to 6, wherein a consistent TCP/IP connection (4, 12) is established (S8) from the central station (1) via the distribution station (2) to the data carrier (3), and, by means of a network operation in accordance with the TCP/IP protocol, the operating data (6) are written (S9, S11) by the central station (1) via the distribution station (2) to the data carrier (3) by means of the generated individual addressing.

8. The method according to any of the claims 1 to 7, wherein a USB connection (12) is established between the distribution station (2) and the data carrier (3), and the operating data (6) are sent (S9) from the central station (1) to the distribution station (2), and are written (S11) by the distribution station (2) via the USB connection (12) to a memory (13) of the data carrier (3).

9. The method according to claim 8, wherein an individual addressing is generated (S4, S5) which comprises at least one writing-system-wide unique, data-carrier-individual MAC address of the data carrier (3), via which the data carrier (3) can be uniquely addressed by the distribution station (2) via the USB connection (12).

10. The method according to claim 9, wherein the MAC address is generated (S4, S5) by the data carrier (3) and is transmitted (S7) to the distribution station (2) to which the data carrier (3) is connected, or that the MAC address is generated (S4, S5) by the distribution station (2) to which the data carrier (3) is connected and is transmitted (S7) at least to the central station (1).

11. A writing system (1, 2) for the writing of operating data (6) to portable data carriers (3), wherein the operating data (6) are initialization data and/or personalization data, wherein the writing system (1, 2) comprises a central station (1) and several distribution stations (2) connected to the central station (1), wherein several of the data carriers (3) are connected to at least one of the distribution stations (2) and the writing system is adapted to send the operating data (6) from the central station (1) via the at least one distribution station (2) to one of the several data carriers (3), wherein for the data carrier (3) an individual addressing is generated (S4, S5), via which the data carrier (3) can be uniquely addressed writing-system-wide upon writing (S9, S11) the operating data (6), and the operating data are forwarded from the central station (1) via the distribution station (2) to the data carrier (3) in accordance with a uniform communication protocol, wherein in this communication protocol the writing-system-wide unique addressing is used throughout.

12. The writing system (1, 2) according to claim 11, wherein the writing system is adapted to carry out a method according to any of the claims 2 to 12.

13. The writing system (1, 2) according to claim 11 or 12, wherein the portable data carriers (3) comprise at least one processor (15), a memory (13), as well as an interface device (14) and an address generator (16) adapted to generate at least a part of the individual addressing.

14. The writing system (1, 2) according to any of the claims 11 to 13, wherein the data carrier (3) is a chip card, smart card, mobile communication card or secure multimedia card.

15. The writing system (1, 2) according to any of the claims 11 to 14, wherein, for forwarding operating data (6) written by the central station (1) to the portable data carrier (3) connected to the distribution station, the distribution station (2) comprises an address generator (8a) adapted to generate at least a part of the individual addressing.

## Revendications

1. Procédé d'écriture (S9, S11) de données de fonctionnement (6) par un système d'écriture (1, 2) dans des supports de données (3) dans le cadre d'une fabrication des supports de données (3), les données de fonctionnement (6) étant des données d'initialisation et/ou de personnalisation, le système d'écriture (1, 2) comprenant une station centrale (1) et plusieurs stations de répartition (2) reliées à la station centrale (1), et plusieurs des supports de données (3) étant reliés à au moins une des stations de répartition (2), comprenant:
un envoi (S9) des données de fonctionnement (6) de la station centrale (1), par l'intermédiaire de la au moins une station de répartition (2), à un des plusieurs support de données (3), un adressage individuel étant, pour le support de données (3), généré (S4, S5), par l'intermédiaire duquel le support de données (3) est, lors de l"écritur (S9, S11) des données de fonctionnement (6), pour l'ensemble du système d'écriture, univoquement adressable, et
les données de fonctionnement étant transmises de la station centrale (1), par l'intermédiaire de la station de répartition (2), au support de données (3) conformément à un protocole unique de communication, l'adressage univoque pour l'ensemble du système d'écriture étant, dans ce protocole de communication, continuellement utilisé.

2. Procédé selon la revendication 1, dans lequel
- pour chacun d'une pluralité de supports de données (3) reliés à au moins une station de répartition (2) du système d'écriture (1, 2), un adressage individuel est généré (S4, S5), lequel est différent par paires de tous les autres adressages individuels générés pour la pluralité de supports de données (3); et
- les données de fonctionnement (6) sont, par le fait d'adresser chacun de la pluralité de supports de données (3) au moyen de son adressage individuel par la station centrale (1), écrites (S9, S11) quasiment simultanément dans la pluralité de supports de données (3).

3. Procédé selon la revendication 1 ou 2, dans lequel un adressage individuel comprenant au moins deux adresses est généré (S4, S5) pour adresser univoquement le support de données (3) pour l'ensemble du système d'écriture selon un protocole de communication multicouche, chacune des au moins deux adresses de l'adressage individuel étant adaptée à adresser univoquement le support de données (3) pour l'ensemble du système d'écriture par l'intermédiaire de respectivement une couche de protocole du protocole de communication multicouche, et étant générée (S4, S5) par le support de données (3) ou par la station de répartition (2).

4. Procédé selon une des revendications de 1 à 3, dans lequel, pour adresser le support de données (3) univoquement pour l'ensemble du système d'écriture, un adressage individuel est généré (S4, S5) par l'intermédiaire d'une liaison TCP/IP continue (4, 12) conformément au protocole de communication TCP/IP entre la station centrale (1) et le support de données (3), lequel adressage comprend au moins une adresse IP du support de données (3) individuelle au support de données et univoque pour l'ensemble du système d'écriture.

5. Procédé selon une des revendications de 1 à 4, dans lequel l'adresse du support de données (3) est générée (S4, S5) sur la base d'un identificateur individuel du support de données (3) ou sur la base d'un chiffre aléatoire, ou l'adresse est sélectionnée (S5) de telle sorte de façon régulièrement répartie à partir d'un espace d'adresses donné qu'elle se répète le plus rarement possible.

6. Procédé selon une des revendications 4 ou 5, dans lequel l'adresse IP est générée (S4, S5) par le support de données (3) et est transmise (S7) au moins à la station de répartition (2) à laquelle le support de données (3) est relié, ou l'adresse IP est générée (S4, S5) par la station de répartition (2) à laquelle le support de données (3) est relié et est transmise (S7) au moins à la station centrale (1).

7. Procédé selon une des revendications de 4 à 6, dans lequel une liaison TCP/IP continue (4, 12) est établie (S8) de la station centrale (1) au support de données (3) par l'intermédiaire de la station de répartition (2) et les données de fonctionnement (6) sont écrites (S9, S11) dans le support de données (3) au moyen d'une opération réseau conformément au protocole de communication TCP/IP de la station centrale (1) par l'intermédiaire de la station de répartition (2) au moyen de l'adressage individuel généré.

8. Procédé selon une des revendications de 1 à 7, dans lequel une liaison USB (12) est établie entre la station de répartition (2) et le support de données (3) et les données de fonctionnement (6) sont envoyées (S9) de la station centrale (1) à la station de répartition (2) et sont écrites (S11) de la station de répartition (2) par l'intermédiaire d'une liaison USB (12) dans une mémoire (13) du support de données (3).

9. Procédé selon la revendication 8, dans lequel un adressage individuel est généré (S4, S5), lequel comprend au moins une adresse MAC du support de données (3) individuelle au support de données et univoque pour l'ensemble du système d'écriture, par l'intermédiaire de laquelle le support de données (3) est univoquement adressable de la station de répartition (2) par l'intermédiaire de la liaison USB (12).

10. Procédé selon la revendication 9, dans lequel l'adresse MAC est générée (S4, S5) par le support de données (3) et est transmise (S7) à la station de répartition (2) avec laquelle le support de données (3) est relié, ou l'adresse MAC est générée (S4, S5) par la station de répartition (2) avec laquelle le support de données (3) est relié et est transmise (S7) au moins à la station centrale (1).

11. Système d'écriture (1, 2) destiné à l'écriture de données de fonctionnement (6) dans des supports de données (3) portables, les données de fonctionnement (6) étant des données d'initialisation et/ou de personnalisation, le système d'écriture (1, 2) comprenant une station centrale (1) et plusieurs stations de répartition (2) reliées à la station centrale (1), plusieurs des supports de données (3) étant reliés à au moins une des stations de répartition (2), et le système d'écriture étant configuré pour envoyer les données de fonctionnement (6) de la station centrale (1), par l'intermédiaire de la au moins une station de répartition (2), à un des plusieurs support de données (3), un adressage individuel étant, pour le support de données (3), généré (S4, S5), par l'intermédiaire duquel le support de données (3) est, lors de l'écriture (S9, S11) des données de fonctionnement (6), univoquement adressable pour l'ensemble du système d'écriture, et les données de fonctionnement étant transmises de la station centrale (1), par l'intermédiaire de la station de répartition (2), au support de données (3) conformément à un protocole unique de communication, l'adressage univoque pour l'ensemble du système d'écriture étant, dans ce protocole de communication, continuellement utilisé.

12. Système d'écriture (1, 2) selon la revendication 11, le système d'écriture étant configuré pour exécuter un procédé selon une des revendications de 2 à 12.

13. Système d'écriture (1, 2) selon la revendication 11 ou 12, les supports de données (3) portables comprenant au moins un processeur (15), une mémoire (13) et un dispositif d'interface (14), et comportant un générateur d'adresses (16) qui est configuré pour générer au moins une partie de l'adressage individuel.

14. Système d'écriture (1, 2) selon une des revendications de 11 à 13, le support de données (3) étant une carte à puce, Smart Card, carte de téléphonie mobile ou carte multimedia sécurisée.

15. Système d'écriture (1, 2) selon une des revendications de 11 à 14, la station de répartition (2), pour la transmission de données de fonctionnement (6) qui sont écrites par la station centrale (1) dans le support de données (3) portable relié à la station de répartition, comprenant un générateur d'adresses (8a) qui est configuré pour générer au moins une partie de l'adressage individuel.
